# EUROPEAN PATENT APPLICATION

(11) **EP 4 835 308 A1**
(43) Date of publication of application: **04.11.2026**
(21) Application number: 26175724.9
(22) Date of filing: 30.04.2026
(51) Int. Cl.: F16B 7/02, F16B 7/18, F16B 19/02, E04G 21/14, E04H 5/12, E04C 3/30

(54) **SPLICE GUIDE AND ASSOCIATED METHODS OF USE**

(30) Priority: 01.05.2025 US 202563798351 P
(71) Applicant: SPX Cooling Tech, LLC, Overland Park KS 66213 (US)
(72) Inventor: KEFFER, Dennis, Overland Park (US); ROBERTS, Spencer, Overland Park (US); HEAVENER, Brandon, Overland Park (US); HANNA, Jared, Lee's Summit (US)
(74) Representative: Viering, Jentschura & Partner mbB Patent- und Rechtsanwälte

(57) **Abstract**

The present disclosure is directed to a coupling assembly for joining a first segment and a second segment of a structure. The coupling assembly includes a splice tube including an opening extending entirely therethrough and a tapered guide having a first end and a second end. The tapered guide includes a guide portion positioned proximate to the first end, where the guide portion includes a guide portion first end and a guide portion second end, the guide portion including a ridge positioned at the guide portion second end, where a first width of the tapered guide at the guide portion first end is less than a second width of the tapered guide at the ridge. The tapered guide further includes an insert portion coupled to the guide portion and extending between the guide portion and the second end.

## Description

### CROSS-REFERENCE TO RELATED APPLICATIONS

This application claims priority to U.S. Provisional Application Serial No. 63/798,351, filed May 1, 2025, entitled "SPLICE GUIDE," currently pending, the entirety of which is incorporated herein by reference.

### FIELD OF INVENTION

This disclosure relates to a device for joining two sections of a tubular object or structure, and more particularly to a splice tube with a tapered guide member.

### BACKGROUND

Splice tubes are structural components used to join two sections of a tubular object, such as a tube, cable, column, pipe, and the like. For example, splice tubes are common in a variety of industries, including telecommunications, HVAC, construction, electrical engineering, and others. The splice tube may be positioned within the sections being joined, for example, such that a portion of the splice tube is positioned in one of the sections and another portion of the splice tube is positioned in the other section. The splice tube may be bolted or otherwise coupled to each of the sections, thereby imparting the structure as a whole with added stability and/or structural rigidity.

In many contexts, splice tubes are used to provide additional stability to vertical columns or structures that support heavy loads. For example, a splice tube may be used to join a lower portion of a column to an adjacent upper portion of the column. In such instances, the splice tube may be partially positioned within the lower portion such that at least a portion of the splice tube is available to be received within the upper portion. The upper portion may subsequently be lowered into place such that the upper portion receives the available portion of the splice tube and rests atop the lower portion. However, this process typically requires one or more operators to manually guide the upper portion over the splice tube and onto the lower portion by hand. Thus, there is a risk of injury (e.g., pinching the fingers of an operator between the upper and lower portions) associated with erecting vertical columns or other similar structures. Therefore, a need exists for a device that can aid in the construction of vertical structures using splice tubes by removing or reducing the need for an operator to manually guide the upper portion into place.

### SUMMARY

In one aspect, a coupling assembly for joining a first segment and a second segment of a structure is disclosed. The coupling assembly includes a splice tube including an opening extending entirely therethrough and a tapered guide defined by a first end and a second end. The tapered guide includes a guide portion positioned proximate to the first end, where the guide portion includes a guide portion first end and a guide portion second end, the guide portion including a ridge positioned at the guide portion second end, where a first width of the tapered guide at the guide portion first end is less than a second width of the tapered guide at the ridge. The tapered guide further includes an insert portion coupled to the guide portion and extending between the guide portion and the second end, the insert portion including at least one leg, where the insert portion is designed to be received within the opening of the splice tube.

In some instances, the insert portion further includes at least one carveout positioned proximate to the second end.

In some instances, the insert portion includes at least two legs that are substantially square in cross-section, and the at least one carveout is positioned between the at least two legs and is configured to accommodate one or more fasteners.

In some instances, the tapered guide includes a hollowed-out interior configuration such that a hollow space extends through the tapered guide from the guide portion through the insert portion.

In some instances, the tapered guide includes one or more weep holes extending through one or more walls of the guide portion and into the hollow space, the weep holes being configured to permit fluid to drain therethrough.

In some instances, the coupling assembly further includes an internal cross member extending across the hollowed-out interior of the tapered guide between opposing interior walls thereof.

In some instances, the at least one leg has an L-shaped cross-section.

In some instances, the guide portion further includes a canopy positioned at the first end, the canopy being substantially planar and having a canopy width less than the second width at the ridge.

In another aspect, a tapered guide for use with a splice tube is disclosed. The tapered guide includes a guide portion defined by a guide portion first end and a guide portion second end, an insert portion defined by an insert portion first end and an insert portion second end, the insert portion first end being coupled to the guide portion second end, a canopy positioned at the guide portion first end, a ridge positioned at the guide portion second end, at least one leg coupled to the insert portion proximate to the insert portion second end, and at least one carveout formed in the insert portion and positioned at the insert portion second end. The guide portion is tapered such that a width of the guide portion increases from a first width at the canopy to a second width greater than the first width at the ridge.

In some instances, the ridge defines a ridge thickness projecting outwardly from the insert portion, where the ridge is designed to engage a first end of the splice tube.

In some instances, the guide portion includes a guide body defining a taper angle relative to a longitudinal axis of the tapered guide, the taper angle being within a range of about 15° to about 45°.

In some instances, the insert portion includes at least two legs, and the at least one carveout is positioned between the at least two legs and is configured to accommodate one or more fasteners.

In some instances, each leg defines a substantially square cross-section.

In some instances, each leg defines a substantially L-shaped cross-section.

In some instances, the guide portion and the insert portion define a hollowed-out interior.

In a further aspect, a method of assembling a structure including a first segment and a second segment is disclosed. The method includes positioning a splice tube at least partially within a first hollow space of the first segment such that a first portion of the splice tube is disposed within the first hollow space and a second portion of the splice tube extends out of the first hollow space, coupling the splice tube to the first segment via one or more fasteners, inserting a tapered guide having a guide portion and an insert portion into an opening of the splice tube such that the insert portion is disposed within the opening and the guide portion extends beyond the second portion of the splice tube, positioning the second segment proximate to the first segment such that a second hollow space of the second segment is at least partially aligned with the first hollow space, and lowering the second segment onto the first segment such that the second hollow space receives the guide portion, then receives the second portion of the splice tube, and then approaches or contacts the first segment.

In some instances, inserting the tapered guide includes extending the insert portion into the opening of the splice tube until a ridge of the guide portion contacts or engages a first end of the splice tube.

In some instances, the method further comprises positioning a support member around an exterior of the first segment prior to the lowering step, where a receiving space is formed between the support member and the splice tube, the receiving space being configured to at least partially receive the second segment.

In some instances, the method further comprises coupling the second segment to the splice tube via one or more additional fasteners after the lowering step.

In some instances, the insert portion includes at least one carveout extending through the insert portion and positioned proximate to a second end of the tapered guide, the at least one carveout being configured to accommodate the one or more fasteners extending into the opening of the splice tube.

### BRIEF DESCRIPTION OF THE FIGURES

FIG. 1 illustrates an isometric view of an example cooling tower;
FIG. 2 illustrates a side elevational view of a foundation of the cooling tower of FIG. 1;
FIG. 3 illustrates a schematic view of a vertical beam of the foundation of FIG. 2, where an internal surface of the vertical beam is illustrated using broken lines;
FIG. 4 illustrates a front and top isometric view of a splice tube and a tapered guide constructed according to the principles of the present disclosure;
FIG. 5 illustrates a front and top isometric view of the tapered guide of FIG. 4 partially disposed within the splice tube of FIG. 4;
FIG. 6 illustrates a top, front, and left side isometric view of a first example tapered guide constructed according to the principles of the present disclosure;
FIG. 7A illustrates a left side elevational view of the tapered guide of FIG. 6;
FIG. 7B illustrates a left side elevational view of the tapered guide of FIG. 7A, depicting a taper angle α defined between a longitudinal axis A1 of the tapered guide and a taper line T1 extending along an outer surface of the guide portion body;
FIG. 8 illustrates a top, rear, and left side isometric view of the tapered guide of FIG. 6;
FIG. 9 illustrates a top, front, and left side isometric view of a second example tapered guide constructed according to the principles of the present disclosure;
FIG. 10 illustrates a left side elevational view of the tapered guide of FIG. 9;
FIG. 11 illustrates a top, rear, and left side isometric view of the tapered guide of FIG. 9;
FIG. 12A illustrates an isometric view of a third example tapered guide constructed according to the principles of the present disclosure, the third example tapered guide including a hollowed-out interior configuration, L-shaped legs, and one or more weep holes;
FIG. 12B illustrates a bottom plan view of the tapered guide of FIG. 12A, depicting the hollowed-out interior configuration, one or more weep holes formed therein, and an internal cross member extending across the hollowed-out interior;
FIG. 12C illustrates a cross-sectional view of the third example tapered guide of FIG. 12A;
FIG. 13A illustrates a first isometric view of a fourth example tapered guide constructed according to the principles of the present disclosure;
FIG. 13B illustrates a second isometric view of the fourth example tapered guide of FIG. 13A;
FIG. 14A illustrates a first isometric view of a fifth example tapered guide constructed according to the principles of the present disclosure;
FIG. 14B illustrates a second isometric view of the fifth example tapered guide of FIG. 14A;
FIG. 15A illustrates a first isometric view of a sixth example tapered guide constructed according to the principles of the present disclosure;
FIG. 15B illustrates a second isometric view of the sixth example tapered guide of FIG. 15A;
FIG. 16A illustrates a first isometric view of a seventh example tapered guide constructed according to the principles of the present disclosure;
FIG. 16B illustrates a second isometric view of the seventh example tapered guide of FIG. 16A;
FIG. 17A illustrates a first isometric view of an eighth example tapered guide constructed according to the principles of the present disclosure;
FIG. 17B illustrates a second isometric view of the eighth example tapered guide of FIG. 17A;
FIG. 18 is a flowchart illustrating a method of assembling a structure including a first segment and a second segment according to the principles of the present disclosure;
FIG. 19 illustrates a schematic depiction of a first step of the method of FIG. 18;
FIG. 20 illustrates a schematic depiction of a second step of the method of FIG. 18;
FIG. 21 illustrates a schematic depiction of a third step of the method of FIG. 18;
FIG. 22 illustrates a schematic depiction of a fourth step and a fifth step of the method of FIG. 18; and
FIG. 23 illustrates a schematic depiction of a sixth step of the method of FIG. 18.

These and other aspects and advantages of the present disclosure will become apparent to those skilled in the art after considering the following detailed description in connection with the accompanying drawings.

### DETAILED DESCRIPTION

Before any aspects of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Terms indicating relative position such as "above," "below," "upper," "lower," "rear," "front," and so forth are used for purposes of illustration only, unless otherwise noted and are made with reference to the orientation of the drawings. It should be understood that these terms are not generally meant to indicate a preferred orientation when such an orientation is not inherently or explicitly required.

The present disclosure is directed to a device or coupling assembly configured or designed to facilitate coupling between two segments of a structure (e.g., a vertical structure such as a column, beam, tower, and the like). For example, the coupling assembly may include a splice tube and a tapered guide. The splice tube may be configured or designed to be positioned within the structure such that a first portion of the splice tube is positioned within a hollow space of the first segment and a second portion of the splice tube is positioned within a hollow space of the second segment. The tapered guide may include an insert portion and a guide portion. The insert portion may be received within an opening of the splice tube, and the guide portion may extend beyond the splice tube. In some instances, the guide portion may be tapered such that the uppermost portion of the guide portion has a smaller width or profile than the remainder of the guide portion. In this way, the uppermost portion may be conveniently received by the hollow space of the second segment, and the guide portion may help guide the second segment into a desired alignment with the first segment as the second segment is lowered into place. As a result, the coupling assembly may reduce or eliminate a need for an operator to manually handle the second segment as the second segment is lowered onto the first segment, thereby reducing or eliminating a likelihood of injury (e.g., pinching) during the construction process.

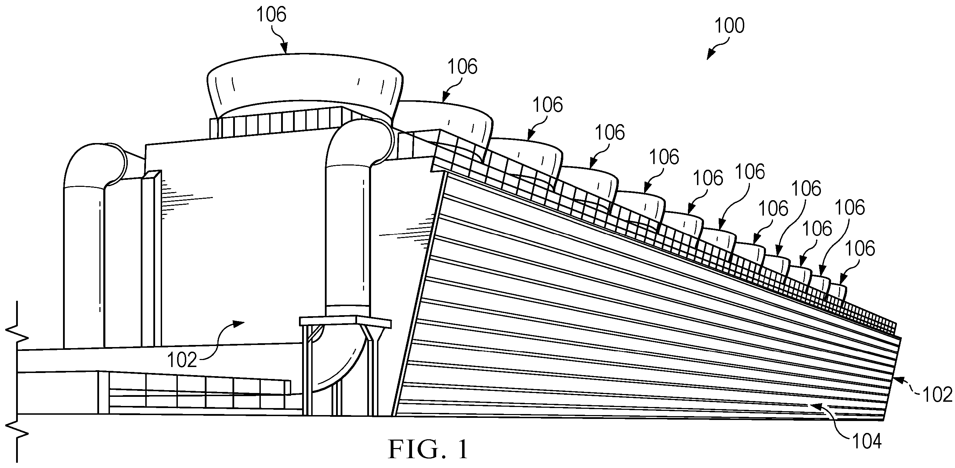

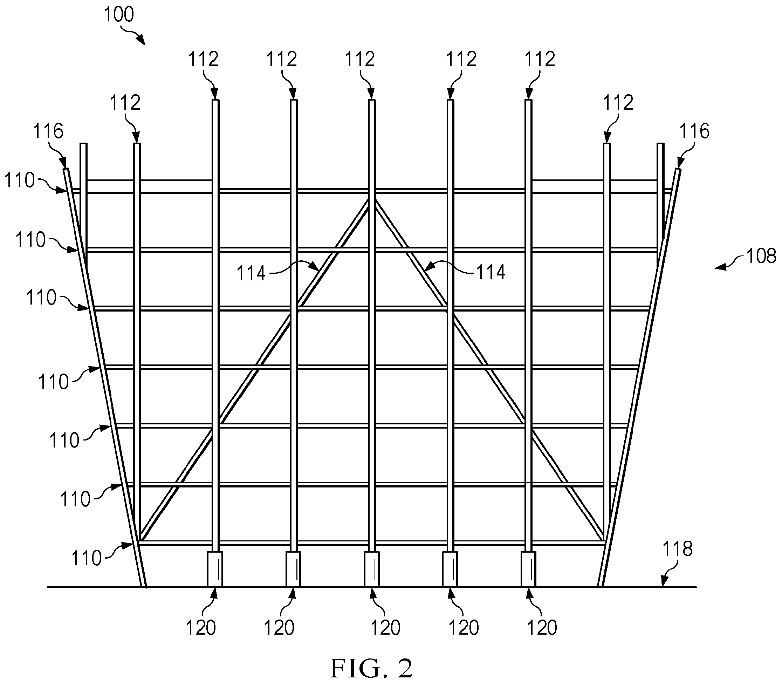

The splice tube and tapered guide disclosed herein may aid the construction of a wide variety of structures (e.g., by facilitating coupling between adjacent portions of vertical structures such as columns). For example, FIGS. 1 and 2 depict an example cooling tower 100 (e.g., a field-erected cooling tower). In some instances, the splice tube and tapered guide disclosed herein may be used in the construction of the cooling tower 100 as described in detail below. However, it will be understood that, in other instances, the splice tube and tapered guide disclosed herein may be used in the construction of other objects or structures.

As best shown in FIG. 1, the cooling tower 100 may be defined by two substantially planar barriers 102 positioned at opposing ends of the cooling tower 100. The cooling tower 100 may have two sides extending between the barriers 102. For example, the sides of the cooling tower 100 may each include a plurality of louvers 104 (e.g., designed to enable air to enter the cooling tower 100). One or more fan stacks 106 may be at least partially positioned within the cooling tower 100. For example, the fan stacks 106 may house fans (not shown) configured or designed to facilitate cooling by increasing airflow through the cooling tower 100.

Turning to FIG. 2, the example cooling tower 100 of FIG. 1 is depicted in a partially constructed state. The cooling tower 100 may include a foundation 108 including one or more horizontal beams 110, one or more vertical beams 112 oriented substantially perpendicular with respect to the horizontal beams 110, one or more diagonal support beams 114, and one or more side beams 116 defining the opposing sides of the cooling tower 100. The foundation 108 may be supported by a base 118 (e.g., formed from concrete or other materials), and the vertical beams 112 may include an end that is received by a base member 120 configured or designed to maintain a proper position and/or orientation of the vertical beams 112 and to impart the foundation 108 with stability and/or structural rigidity.

In some instances, the vertical beams 112 (and/or other components of the foundation 108) may be formed from a fiber-reinforced polymer (FRP). In other instances, the vertical beams 112 may be formed from other materials (e.g., wood, metal, etc.). The vertical beams 112 may be provided in the form of two or more segments configured or designed to be assembled and erected on-site. For example, a first portion of the vertical beam 112 may be installed within the associated base member 120, and one or more additional portions of the vertical beam 112 may be lowered onto the first portion (e.g., using a crane or other machine) during construction of the foundation 108.

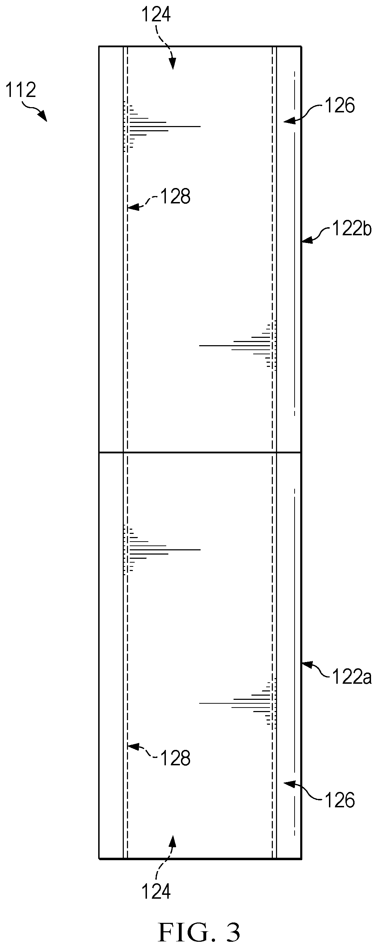

Turning to FIG. 3, in some instances, the vertical beam 112 may be provided in the form of a first segment 122a and a second segment 122b configured or designed to be joined on-site when the foundation 108 is constructed. For example, the first segment 122a may be positioned on (e.g., at least partially received by) the respective base member 120 (see FIG. 2), and the second segment 122b may be lowered onto the first segment 122a from above.

In some instances, the first and second segments 122a, 122b may be substantially tubular such that a hollow space 124 extends through the first and second segments 122a, 122b. For example, the first and second segments 122a, 122b may each include an external surface 126 and an internal surface 128 defining the hollow space 124. The first and second segments 122a, 122b may be designed such that the internal surface 128 and the hollow space 124 of the first segment 122a are substantially aligned with the internal surface 128 and the hollow space 124 of the second segment 122b when the first and second segments 122a, 122b are joined.

In some instances, the first and second segments 122a, 122b may be formed from FRP and may be imparted with a substantially square or rectangular shape. However, in other instances, the first and second segments 122a, 122b may be formed from any material and may be imparted with any shape (e.g., cylindrical, triangular, etc.).

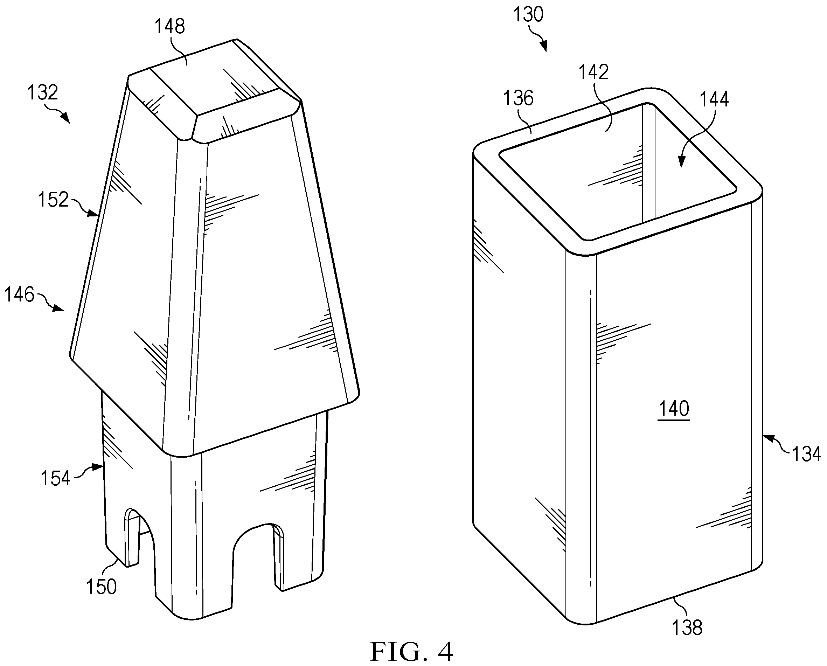

Turning to FIG. 4, a splice tube 130 and a tapered guide 132 may aid in the construction of the vertical beam 112. The splice tube 130 may be provided in the form of a substantially tubular splice tube body 134 defined by a splice tube first end 136 and a splice tube second end 138 opposing the splice tube first end 136. The splice tube 130 may include a splice tube external surface 140 and a splice tube internal surface 142 defining a splice tube opening 144 extending between the splice tube first and second ends 136, 138. In the example of FIG. 4, the splice tube 130 may be imparted with a substantially square or rectangular shape. However, in other instances, the splice tube 130 may be imparted with any shape, provided that the splice tube 130 is configured or designed to be positioned or received within the hollow space 124 of the first and second segments 122a, 122b.

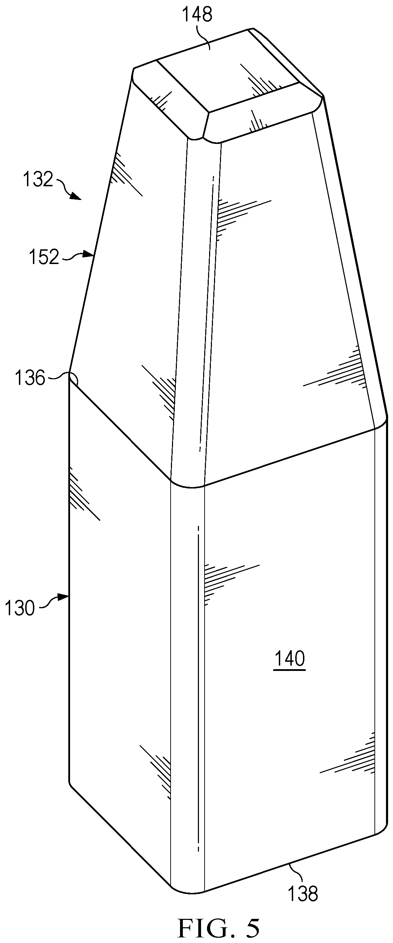

The tapered guide 132 may be provided in the form of a guide body 146 defined by a guide first end 148 and a guide second end 150 opposing the guide first end 148. The guide body 146 may include a guide portion 152 positioned proximate to the guide first end 148 and an insert portion 154 coupled to (e.g., integrally formed with) the guide portion 152 and positioned proximate to the guide second end 150. In other words, the guide body 146 may encompass both the guide portion 152 and the insert portion 154. The insert portion 154 of the tapered guide 132 may be configured or designed to be received within the splice tube opening 144, as best shown in FIG. 5.

The tapered guide 132 and the splice tube 130 may each be formed from any suitable material, including, for example, one or more polymers, metals, composites, or any combination thereof. The material of the splice tube 130 may be selected to be compatible with the material of the first and second segments 122a, 122b. In some instances, the tapered guide 132 may be permanently retained within the splice tube opening 144 after the second segment 122b has been coupled to the first segment 122a.

The tapered guide 132 and/or the splice tube 130 may each be manufactured via any suitable process, including, for example, injection molding, three-dimensional (3D) printing, Computer Numerical Control (CNC) machining, or casting. In some instances, the tapered guide 132 and/or the splice tube 130 may be formed as a unitary, monolithic component. In other instances, the tapered guide 132 and/or the splice tube 130 may be assembled from two or more sub-components joined together (e.g., via adhesive bonding, mechanical fastening, welding, or other suitable joining methods).

For example, the insert portion 154 of the tapered guide 132 and the splice tube internal surface 142 may be imparted with substantially similar dimensions, and the insert portion 154 may extend into the splice tube opening 144 until the guide portion 152 contacts or engages the splice tube first end 136. Thus, the insert portion 154 may be received in a press fit or a friction fit within the splice tube opening 144, or the insert portion 154 may simply be positioned within the splice tube opening 144 such that the guide portion 152 rests on the splice tube first end 136. In the example of FIG. 5, the insert portion 154 of the tapered guide 132 may be received by the splice tube 130 at or proximate to the splice tube first end 136. However, the splice tube first and second ends 136, 138 may each be configured or designed to receive the insert portion 154.

In certain instances, the insert portion 154 of the tapered guide 132 may be configured or designed to engage the splice tube 130 when positioned within the splice tube opening 144. For example, the splice tube internal surface 142 proximate to the splice tube opening 144 may be imparted with a texture that facilitates engagement (e.g., friction) with the insert portion 154 of the tapered guide 132. Alternatively, the tapered guide 132 may include one or more barbs or other protrusions positioned on the insert portion 154 and configured or designed to engage the splice tube 130 when the insert portion 154 is received therein. The insert portion 154 may be received within the splice tube opening 144 in a press fit or friction fit such that the insert portion 154 is retained within the splice tube opening 144 without additional fastening. In other instances, the insert portion 154 may be configured or designed to engage the splice tube 130 via any suitable mechanism, or the insert portion 154 may not engage the splice tube 130.

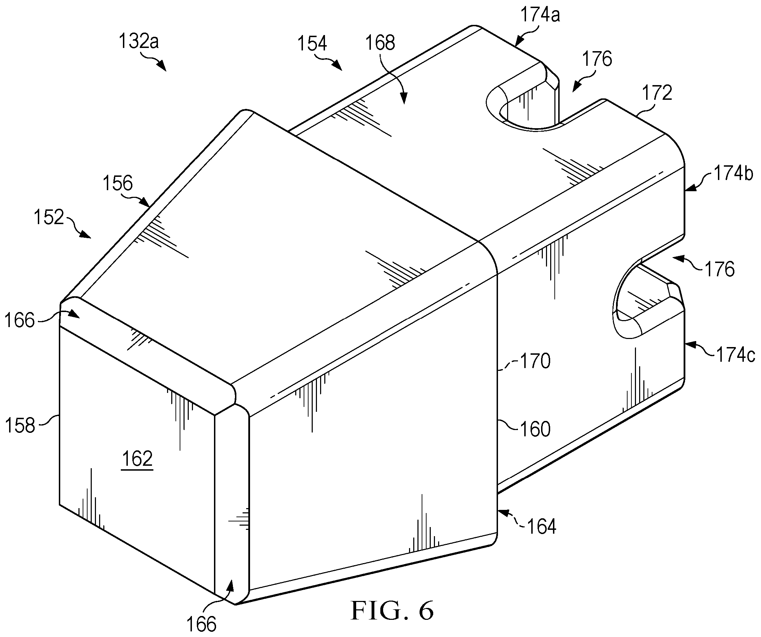

Turning to FIG. 6, a first example tapered guide 132a is depicted. The guide portion 152 may be provided in the form of a guide portion body 156 defined by a guide portion body first end 158 and a guide portion body second end 160 opposing the guide portion body first end 158. In some instances, the guide portion body 156 may be imparted with the shape of a frustum of a pyramid or of a truncated pyramid. However, in other instances, the guide portion body 156 may be imparted with other shapes (e.g., conical, frustoconical, etc.).

In some instances, the guide portion body 156 may be imparted with the shape of a cone or a pyramid and may narrow to a point at or proximate to the guide portion body first end 158. In other instances, the guide portion body 156 may include a substantially planar (e.g., substantially rectangular, square, circular, ovoid, etc.) canopy 162 positioned proximate to the guide portion body first end 158 and a ridge 164 positioned proximate to the guide portion body second end 160. In some instances, the ridge 164 may be substantially parallel with respect to the canopy 162. The ridge 164 may be sized and configured or designed to correspond to the splice tube first end 136 such that, when the insert portion 154 is received within the splice tube opening 144, the ridge 164 contacts or engages the splice tube first end 136 and functions as a mechanical stop to limit the depth of insertion of the insert portion 154 into the splice tube opening 144. In some instances, the ridge 164 may be sized to be substantially flush with or to overhang the splice tube first end 136, thereby providing a contact surface at the interface between the tapered guide 132 and the splice tube 130. Additionally, in some instances, the guide portion 152 may include one or more beveled edges 166 positioned adjacent to the canopy 162. For example, the beveled edges 166 may surround the canopy 162 and may be positioned between the edges of the canopy 162 and the outer surface of the guide portion body 156. In some instances, the beveled edges 166 may form a substantially continuous curved surface extending between the canopy 162 and the outer surface of the guide portion body 156. However, in other instances, the beveled edges 166 may be omitted.

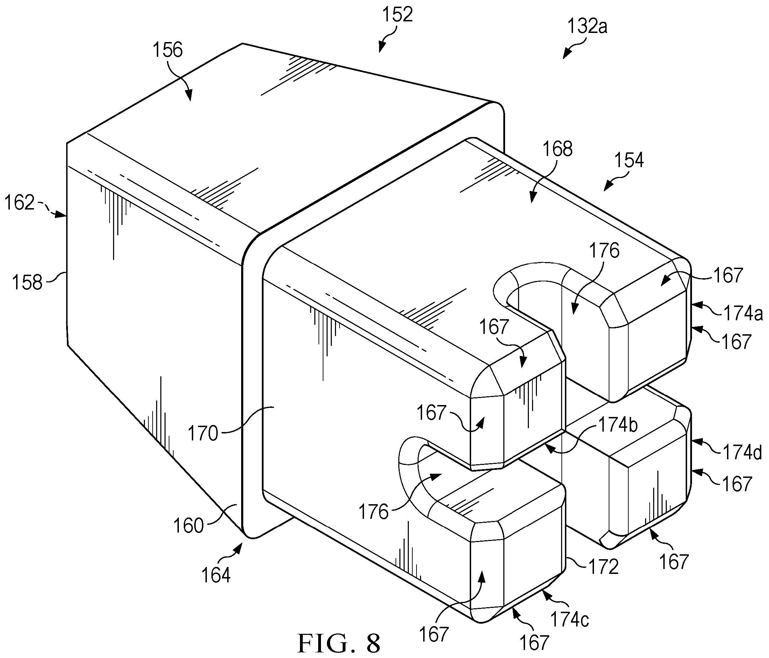

The insert portion 154 may include an insert portion body 168 defined by an insert portion body first end 170 and an insert portion body second end 172 opposing the insert portion body first end 170. In some instances, the insert portion body 168 may be substantially rectilinear. However, in other instances, the insert portion body 168 may be imparted with any other shape (e.g., cylindrical, frustoconical, etc.). The insert portion body 168 may be coupled to the guide portion 152 at the guide portion body second end 160 and may include one or more legs 174 positioned proximate to the insert portion body second end 172. In the example of FIG. 6, the insert portion body 168 may include four legs 174a-174d (the fourth leg 174d being obscured from view in FIG. 6 by the viewing angle and being visible in FIG. 8). However, in other instances, the insert portion body 168 may include any number of legs 174. In some instances, the legs 174 may be imparted with a substantially square cross-sectional shape so as to correspond to the shape of the splice tube opening 144. However, in other instances, the legs 174 may be imparted with any suitable cross-sectional shape (e.g., rectangular, L-shaped, etc.). In addition, in various instances, the shape of the cross-sectional shape of the legs 174 may correspond to or depend on the shape of the splice tube opening 144. In some instances, the legs 174 may be substantially rigid. In some such instances, the legs 174 may be secured in the splice tube opening 144 via a friction fit. In other instances, the legs 174 may be semi-resilient or flexible such that the legs 174 are configured or designed to deflect inwardly upon insertion into the splice tube opening 144 and to engage the splice tube internal surface 142 in a snap-fit arrangement.

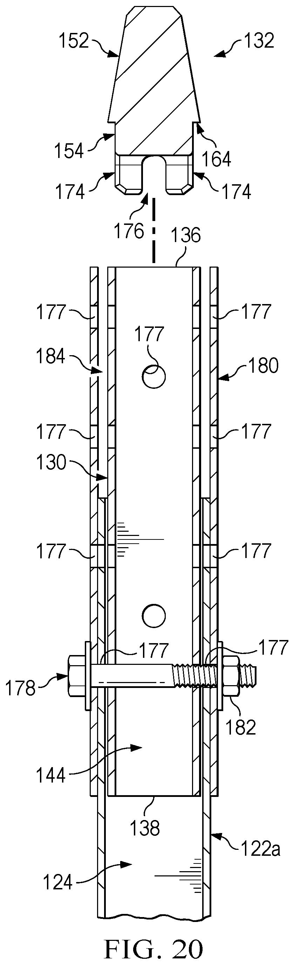

In some instances, tapered guide 132a may include one or more carveouts 176 extending entirely through the insert portion 154 (e.g., the carveouts 176 may be configured or designed to accommodate one or more fasteners (e.g., a fastener 178 of FIGS. 20-23) when the splice tube 130 and tapered guide 132a are in use). For example, the carveouts 176 may be positioned proximate to the insert portion body second end 172 and may at least partially define the legs 174. In some instances, the tapered guide 132a may include two substantially linear, arch-shaped carveouts 176 positioned at the insert portion body second end 172 and oriented substantially perpendicular with respect to one another (see, e.g., FIG. 8). However, in other instances, the tapered guide 132a may include any number of carveouts 176 provided in any form and arranged in any suitable configuration.

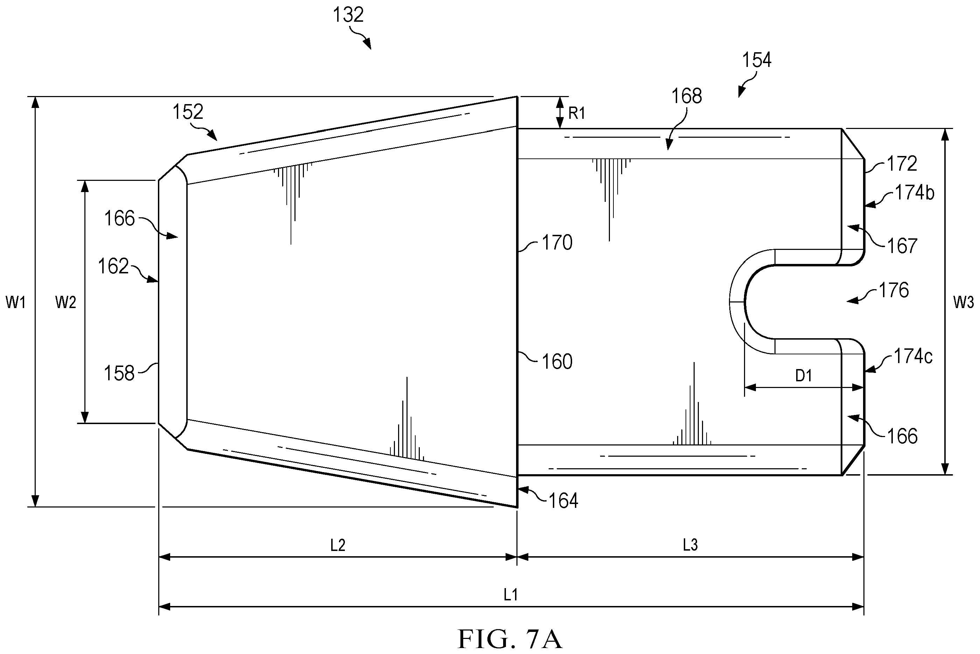

As shown best in FIGS. 7A and 8, in some instances, the legs 174 may include one or more beveled edges 167 positioned at or proximate to the insert portion body second end 172. For example, the beveled edges 167 of the legs 174 may facilitate inserting the insert portion 154 of the tapered guide 132a into the splice tube opening 144 (see FIGS. 4 and 5). However, in other instances, the beveled edges 167 of the legs 174 may be omitted.

As shown in FIG. 7A, the tapered guide 132a may be defined by an overall length L1 measured linearly between the guide portion body first end 158 and the insert portion body second end 172 and an overall width W1 measured linearly across the widest portion of the guide portion 152 (e.g., at the ridge 164). Additionally, the canopy 162 may be defined by a second width W2, which may be less than the overall width W1. The overall length L1 may include a second length L2 (e.g., defining a length of the guide portion 152) and a third length L3 (e.g., defining a length of the insert portion 154). In some configurations, L2 and L3 may be substantially equivalent. Alternatively, L2 may be greater than or less than L3. Generally, the respective lengths of L2 and L3 may be selected to accommodate a variety of design considerations, including expected mechanical, thermal, and environmental forces, including, for example, tension, vibration, bending, compression, and/or corrosion. It is to be appreciated that the relationship between L2 and L3 is not limited to the specific configurations described herein, and L2 and L3 may each be independently selected to accommodate the particular requirements of a given application.

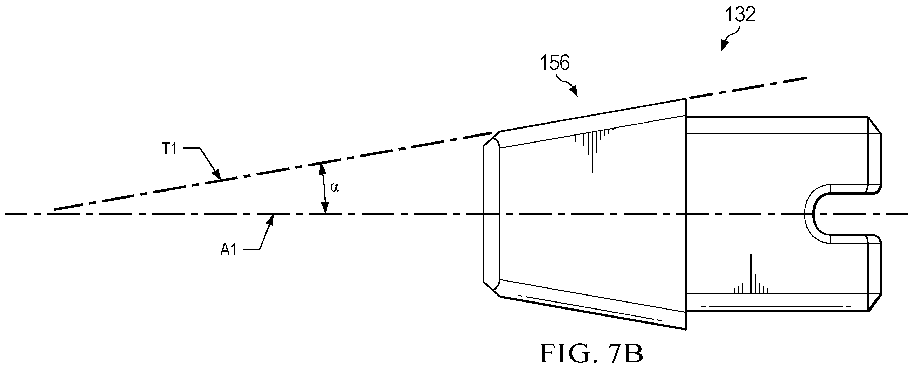

As shown in FIG. 7B, the guide portion body 156 may be tapered at a taper angle α defined between a longitudinal axis A1 of the tapered guide 132a and a taper line T1 extending along the outer surface of the guide portion body 156. The taper angle α may be selected based on the intended application conditions (e.g., environmental conditions, the degree of misalignment expected between the first and second segments 122a, 122b, and/or the dimensions of the hollow space 124). A larger taper angle α may accommodate a greater degree of misalignment between the first and second segments 122a, 122b, while a smaller taper angle α may provide a more gradual transition and may reduce lateral forces exerted on the second segment 122b during assembly. In some configurations, the taper angle α may be within a range of about 15° to about 45°, or from about 20° to about 40°, or about 25° to about 30°. A taper angle α toward the lower end of the range (e.g., about 15° to about 20°) may be suitable for applications in which the first and second segments 122a, 122b are expected to be substantially aligned prior to assembly and a more gradual guide surface is desired, for example, to reduce the risk of damage to the internal surface 128 of the second segment 122b during lowering. Conversely, a taper angle α toward the upper end of the range (e.g., about 35° to about 45°) may be suitable for applications in which a greater degree of misalignment is anticipated, for example, due to field conditions, wind loading, or dimensional tolerances of the first and second segments 122a, 122b. It is to be appreciated that the taper angle α is not limited to the foregoing ranges, and the taper angle α may be selected to accommodate the particular requirements of a given application.

The ridge 164 may be defined by a first ridge thickness R1. For example, in some instances, the ridge 164 may be substantially perpendicular to the insert portion body 168, and the first ridge thickness R1 may correspond to the distance by which the ridge 164 protrudes outwardly from the insert portion body 168. In some instances, the ridge 164 may function primarily as a mechanical stop configured or designed to limit the depth of insertion of the insert portion 154 into the splice tube opening 144. In other instances, the ridge 164 may additionally or alternatively provide a sealing function at the interface between the ridge 164 and the splice tube first end 136. For example, the ridge 164 may include a seal or a sealing material (e.g., a gasket, an elastomeric strip, a compressible foam, or other suitable sealing element) disposed on a surface of the ridge 164 configured or designed to contact the splice tube first end 136, thereby inhibiting moisture, debris, or other contaminants from entering at the interface between the ridge 164 and the splice tube first end 136. The insert portion body 168 may be defined by a third width W3. For example, the third width W3 may be measured in a similar manner with respect to the first width W1, but the third width W3 may exclude the first ridge thickness R1 on each side of the insert portion body 168. Generally, W1 may be greater than W3, and W3 may be greater than W2. In some configurations, W1 may be substantially equal to an outside diameter of the first segment 122a and the second segment 122b, while W2 may be substantially equal to an inside diameter of the first segment 122a and the second segment 122b (i.e., the diameter of the hollow space 124). Additionally, the carveouts 176 may be defined by a first distance D1 (e.g., measured in a direction perpendicular to the direction of the third width W3). For example, the first distance D1 may correspond to the distance by which the carveouts 176 protrude inwardly from the insert portion body second end 172.

The relationships between the various dimensions of the tapered guide 132a, including L1, L2, L3, W1, W2, W3, and R1, are not limited to the specific configurations described herein, and each such dimension may be independently selected to accommodate the requirements of a given application.

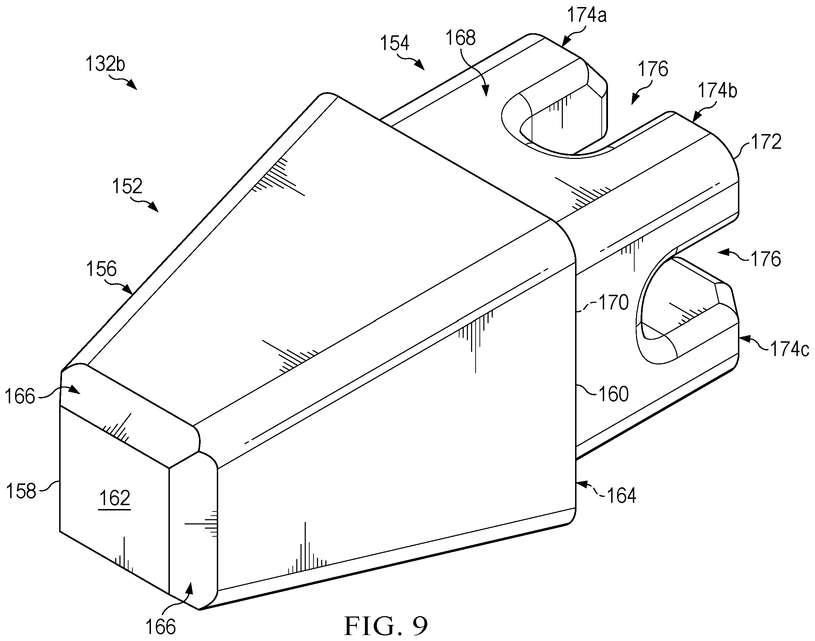

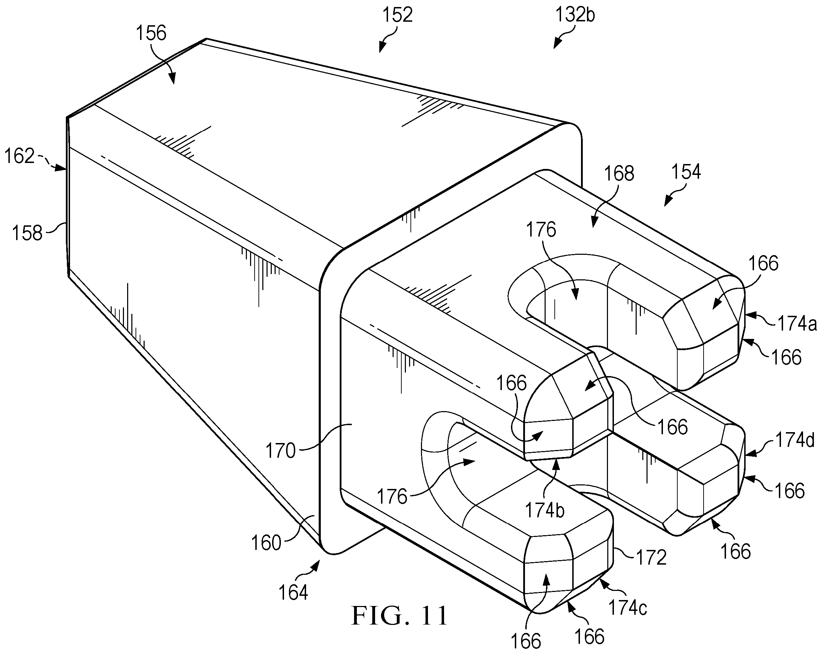

FIGS. 9-11 depict a second example tapered guide 132b, which may be substantially similar to the tapered guide 132a. For example, the tapered guide 132b may also include the guide portion 152, including the canopy 162 and the ridge 164, and the insert portion 154, including one or more legs 174 and one or more carveouts 176. However, the tapered guide 132b may be imparted with different dimensions relative to the tapered guide 132a.

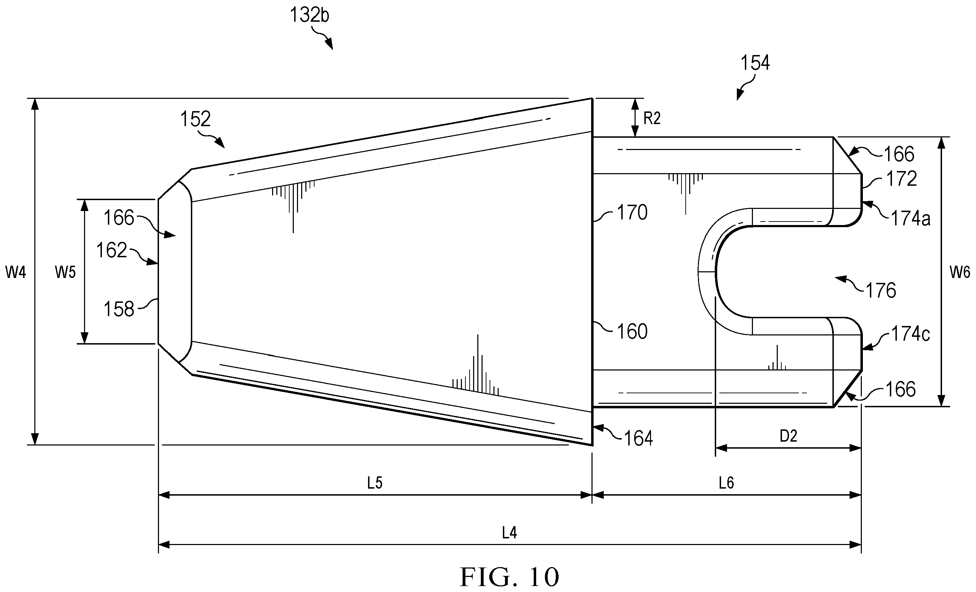

As best shown in FIG. 10, the tapered guide 132b may be defined by an overall length L4 and an overall width W4 (e.g., corresponding to the overall length L1 and the overall width W1 of the tapered guide 132a). The overall length L4 and the overall width W4 may be less than, substantially equal to, or greater than the overall length L1 and the overall width W1.

The overall length L4 may include a fifth length L5 (e.g., corresponding to the second length L2 and defining a length of the guide portion 152) and a sixth length L6 (e.g., corresponding to the third length L3 and defining a length of the insert portion 154). In some instances, the guide portion 152 may account for a greater proportion of the total length of the tapered guide 132b than of the tapered guide 132a. For example, a ratio of the fifth length L5 to the sixth length L6 may be greater than a ratio of the second length L2 to the third length L3.

The canopy 162 of the tapered guide 132b may be defined by a fifth width W5 (e.g., corresponding to the second width W2 of the tapered guide 132a). In some instances, the fifth width W5 may be less than the second width W2. Additionally, the canopy 162 may account for a smaller proportion of the total width of the tapered guide 132b than of the tapered guide 132a. For example, in some instances, a ratio of the fifth width W5 to the overall width W4 may be less than a ratio of the second width W2 to the overall width W1.

The insert portion 154 of the tapered guide 132b may be defined by a sixth width W6 (e.g., corresponding to the third width W3 of the tapered guide 132a). In some instances, the sixth width W6 may be less than the third width W3. Additionally, the insert portion 154 may account for a smaller proportion of the total width of the tapered guide 132b than of the tapered guide 132a. For example, in some instances, a ratio of the sixth width W6 to the overall width W4 may be less than a ratio of the third width W3 to the overall width W1.

The ridge 164 of the tapered guide 132b may be defined by a second ridge thickness R2. In some instances, the second ridge thickness R2 may be greater than the first ridge thickness R1. A thicker ridge 164 may provide a larger bearing surface against the splice tube first end 136, which may distribute loads more evenly, provide for a larger seal area, and may improve the stability of the tapered guide 132b when positioned within the splice tube opening 144. Additionally, the ridge 164 may account for a larger proportion of the total width of the tapered guide 132b than of the tapered guide 132a. For example, in some instances, a ratio of the second ridge thickness R2 to the overall width W4 may be greater than a ratio of the first ridge thickness R1 to the overall width W1. Generally, W4 may be greater than W6, and W6 may be greater than W5. In some example configurations, L5 and L6 may be substantially equivalent, although L5 may alternatively be greater than or less than L6. The relationships between the various dimensions of the tapered guide 132b, including L5, L6, W4, W5, W6, and R2, are not limited to the specific configurations described herein, and each such dimension may be independently selected to accommodate the requirements of a given application.

The carveouts 176 of the tapered guide 132b may be defined by a second distance D2 (e.g., corresponding to the first distance D1). In some instances, the carveouts 176 of the tapered guide 132b may protrude inwardly from the insert portion body second end 172 by a greater distance than the carveouts 176 of the tapered guide 132a. For example, the second distance D2 may be greater than the first distance D1. Additionally (or alternatively), in some instances, a ratio of the second distance D2 to the sixth length L6 may be greater than a ratio of the first distance D1 to the third length L3.

In some instances, the tapered guide 132 and the splice tube 130 may be adapted for use with segments, for example, first segment 122a and second segment 122b, having non-square or non-rectangular hollow spaces (e.g., cylindrical, triangular, hexagonal, or other polygonal cross-sections). For example, the guide portion 152 and the insert portion 154 may each be shaped to substantially mirror the cross-sectional shape of the hollow space 124 of the segments to be joined. Additionally, the splice tube 130 and the tapered guide 132 may be used to join segments of horizontal beams, diagonal members, or other non-vertical structural elements. In some instances, a second tapered guide 132 may be provided at the splice tube second end 138 to facilitate alignment from both ends of the splice tube 130.

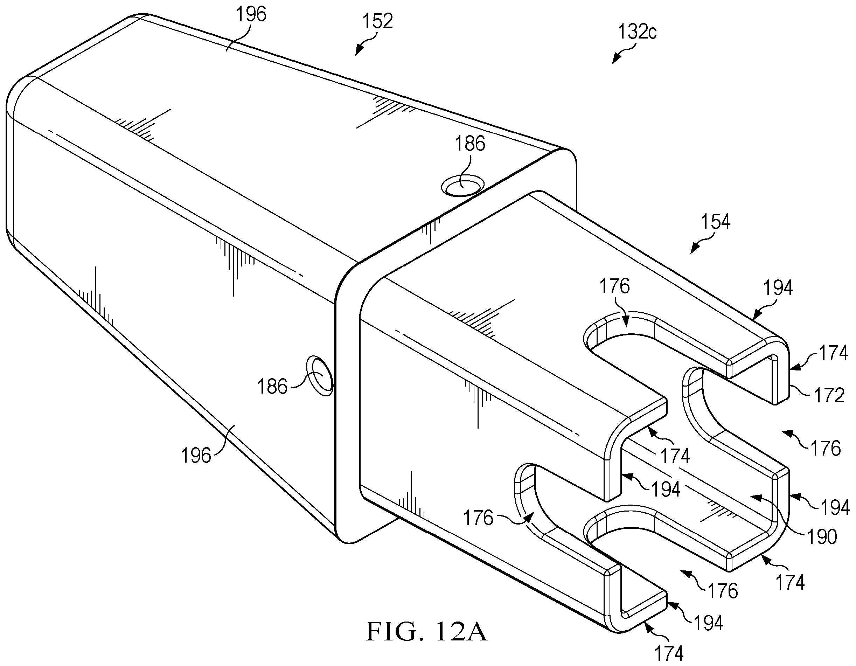

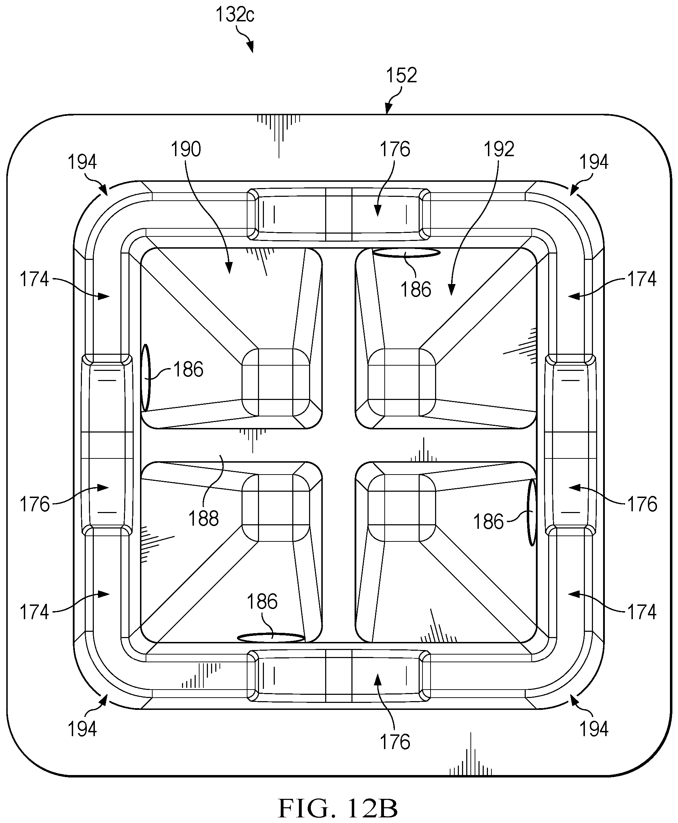

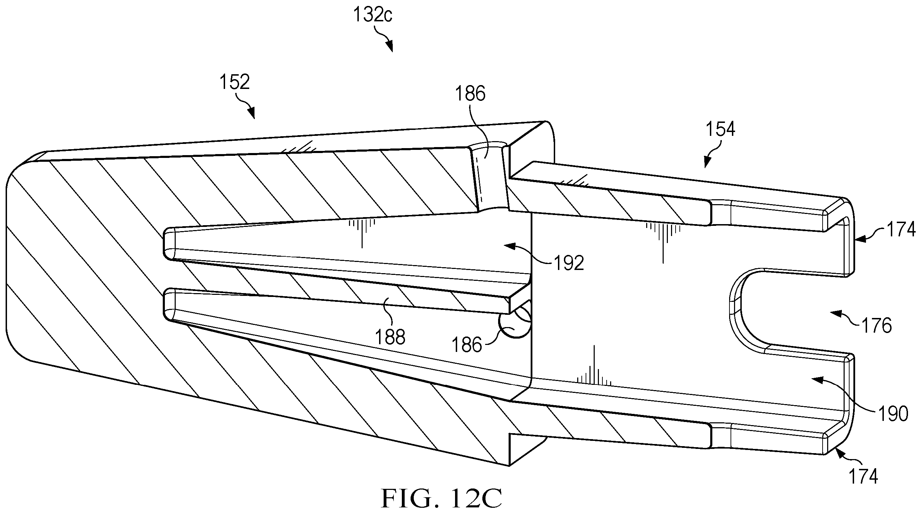

While the above description pertains to the first and second example tapered guides 132a, 132b, in other instances, the tapered guide 132 may be provided in other forms and may be imparted with other dimensions. For example, FIGS. 12A, 12B, and 12C depict a third example tapered guide 132c, which may be substantially similar in function and appearance to the tapered guides 132a, 132b, but may include additional features as described below. For example, the tapered guide 132c may also include the guide portion 152, including the canopy 162 and the ridge 164, and the insert portion 154, including one or more legs 174 and one or more carveouts 176. However, the tapered guide 132c may be imparted with different dimensions relative to the tapered guides 132a, 132b.

FIG. 12A illustrates a third example tapered guide 132c, which may include a hollowed-out interior configuration 190. For example, one or more interior portions of the tapered guide 132c may be omitted or otherwise removed such that the hollowed-out interior configuration 190 extends through or partially through the tapered guide 132c (e.g., from the guide portion 152 through the insert portion 154). The hollowed-out interior configuration 190 may reduce material requirements, thereby reducing weight and simplifying installation, without sacrificing structural strength or integrity. Additionally, the hollowed-out interior configuration 190 may facilitate fabrication of the tapered guide 132c using advantageous techniques, such as, for example, fabrication via injection molding, 3D printing, or other manufacturing processes, by, for example, reducing material usage, decreasing cycle times, and/or improving dimensional consistency during fabrication.

As further shown in FIG. 12A, the tapered guide 132c may include one or more legs 174 positioned proximate to the insert portion body second end 172. In some instances, the legs 174 may have a substantially L-shaped cross-section 194, such that each leg 174 is configured or designed to engage a respective corner of the splice tube opening 144. For example, where the splice tube 130 is imparted with a substantially square or rectangular shape, each L-shaped leg 174 may be configured or designed to nest within and conform to a corresponding interior corner defined by two adjacent walls of the splice tube internal surface 142, thereby facilitating alignment and engagement between the tapered guide 132c and the splice tube 130. One or more carveouts 176 may be positioned between adjacent legs 174 and may extend entirely through the insert portion 154. The carveouts 176 may be configured or designed to accommodate one or more fasteners 178 extending into the splice tube opening 144 when the tapered guide 132c is disposed therein.

Additionally, the tapered guide 132c may include one or more weep holes 186 formed therein. For example, the weep holes 186 may extend through one or more walls 196 of the tapered guide 132c to permit water or other fluid that may accumulate above or within the tapered guide 132c to drain therethrough. In some instances, the weep holes 186 may be positioned on the guide portion 152 above the ridge 164. For example, the weep holes 186 may be positioned proximate or adjacent to the ridge 164. It is to be appreciated that the weep holes 186 may be positioned on any portion of the guide portion 152. Further, the tapered guide 132c may include one weep hole 186 per side of the guide portion 152, although the tapered guide 132c may include no weep holes 186 or more than one weep hole 186 per side of the guide portion 152. Thus, in the instance of FIG. 12A, the tapered guide 132c includes four weep holes 186, although the number of weep holes 186 provided in the tapered guide 132c is not particularly limited. For example, the one or more weep holes 186 may include one weep hole, two weep holes, three weep holes, four weep holes, five weep holes, six weep holes, or even more weep holes. In some instances, the weep holes 186 may be substantially circular. However, in other instances, the weep holes 186 may be imparted with any suitable shape (e.g., oval, rectangular, slotted, etc.). In some instances, the weep holes 186 may be sized to limit debris ingress while still permitting fluid drainage. In some instances, the weep holes 186 may include a substantially conical profile configured or designed to channel water from above the guide portion 152 downwardly through the tapered guide 132c and into the hollow space 124 of the first segment 122a and/or the second segment 122b, thereby directing the water to drain down the column and reducing or preventing the accumulation of ice within or proximate to the tapered guide 132c.

As shown in FIG. 12B, the hollowed-out interior configuration 190 may extend through the tapered guide 132c so as to encompass portions of the guide portion 152 and the insert portion 154. The depth/volume of the hollowed-out interior configuration 190 can be tailored to reduce overall material and weight of the tapered guide 132c while meeting specified design criteria, for example, strength and resilience. FIG. 12B further depicts the one or more weep holes 186 formed in the guide portion 152, with one weep hole 186 positioned on each side of the guide portion 152. Additionally, the tapered guide 132c may include an internal cross member 188 extending across the hollowed-out interior configuration 190 of the tapered guide 132c. For example, the internal cross member 188 may be positioned at or proximate to a midpoint of the tapered guide 132c and may extend between opposing interior walls thereof. The internal cross member 188 may be integrally formed with the tapered guide 132c and may be configured or designed to reinforce the hollowed-out interior configuration 190 extending entirely through the tapered guide 132c and to impart the tapered guide 132c with structural rigidity and integrity, notwithstanding one or more hollow interior cavities 192 defined by the guide portion 152.

Turning to FIG. 12C, a cross-sectional view of the third example tapered guide 132c is depicted. As shown, the hollowed-out interior configuration 190 extends through the tapered guide 132c, defining the one or more hollow interior cavities 192 within the guide portion 152. While each of the one or more hollow interior cavities 192 is shown with a substantially square pyramidal form in FIG. 12C, the shapes of the one or more hollow interior cavities 192 are not particularly limited. For example, each of the one or more hollow interior cavities 192 may be imparted with a substantially cylindrical, a substantially triangular-pyramidal, a substantially pentagonal-pyramidal, or other forms. The internal cross member 188 extends across the hollowed-out interior configuration 190 between opposing interior walls of the tapered guide 132c. In addition, the internal cross member 188 may partially define the one or more hollow interior cavities 192. That is, the internal cross member 188 may be positioned and located between individual members of the one or more hollow interior cavities 192. In certain instances, the internal cross member 188 may be omitted.

The proportion of the guide portion 152 that is occupied by the one or more hollow interior cavities 192 may vary. In some instances, the one or more hollow interior cavities 192 may occupy about 10% to about 90% (or 10% to 90%) of an interior volume of the guide portion 152, although the one or more hollow interior cavities 192 may also occupy more or less of the guide portion 152 than these values. For example, the one or more hollow interior cavities 192 may occupy no more than about 90%, or no more than about 60%, or no more than about 50%, or no more than about 40%, or no more than about 35%, or no more than about 30%, or no more than about 25%, or no more than about 20%, or no more than about 15%, or no more than about 10% of an interior volume of the guide portion 152. As an additional example, the one or more hollow interior cavities 192 may occupy no more than 80%, or no more than 60%, or no more than 50%, or no more than 40%, or no more than 35%, or no more than 30%, or no more than 25%, or no more than 20%, or no more than 15%, or no more than 10% of an interior volume of the guide portion 152.

Referring again to FIGS. 12A-12C, the legs 174 are shown as being imparted with the L-shaped cross-section 194, with each leg 174 positioned at a respective corner of the insert portion 154. The one or more carveouts 176 are positioned between adjacent legs 174. Additionally, the one or more weep holes 186 extend through the walls 196 of the guide portion 152 and into the hollowed-out interior configuration 190, thereby permitting fluid to drain from above or within the tapered guide 132c therethrough.

It is to be appreciated that the tapered guide 132c, and the components thereof, may be provided in other geometries than those explicitly disclosed herein without departing from the scope of the present disclosure.

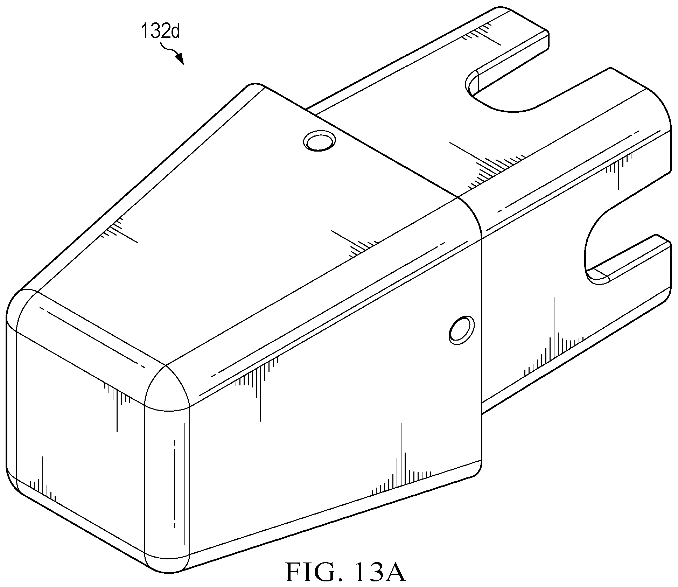

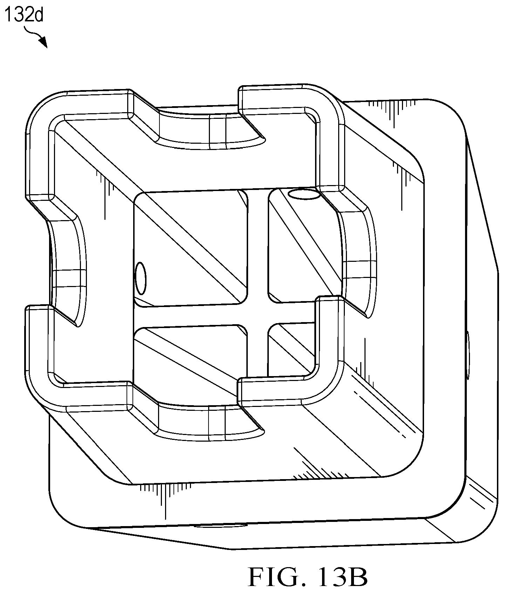

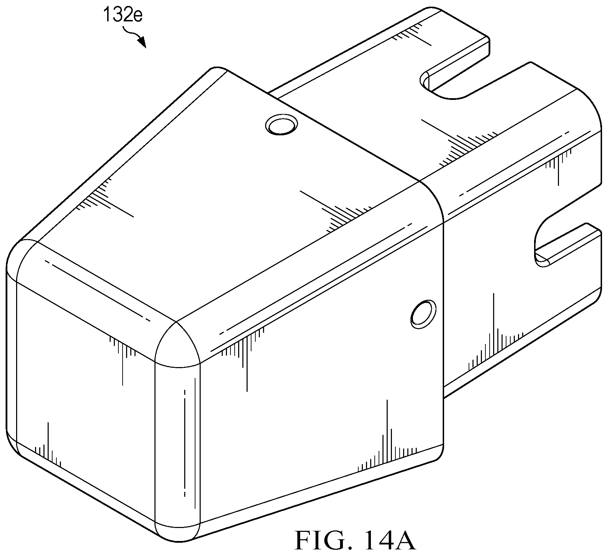

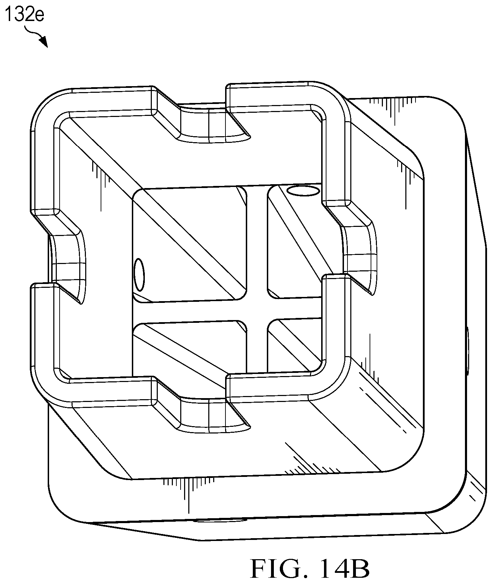

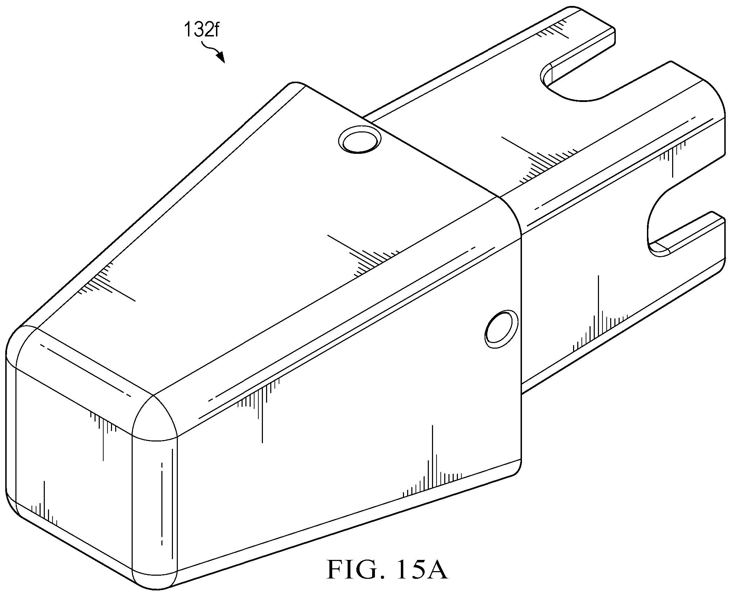

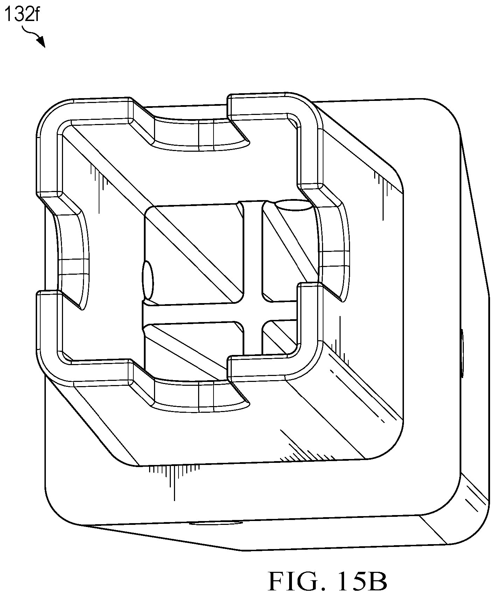

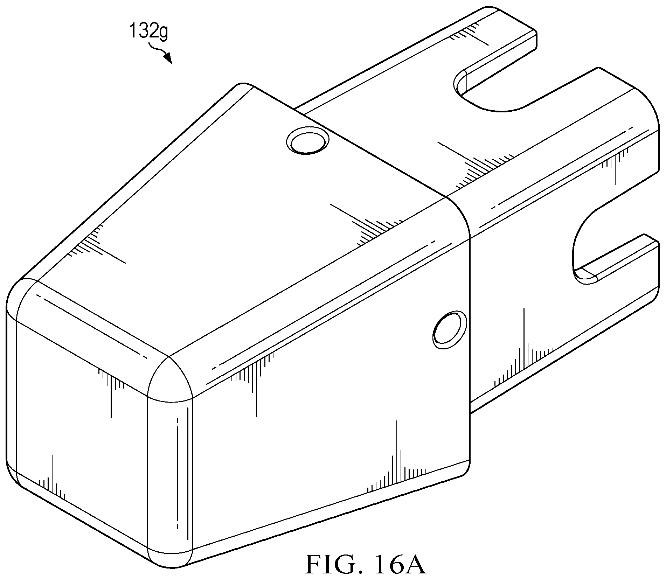

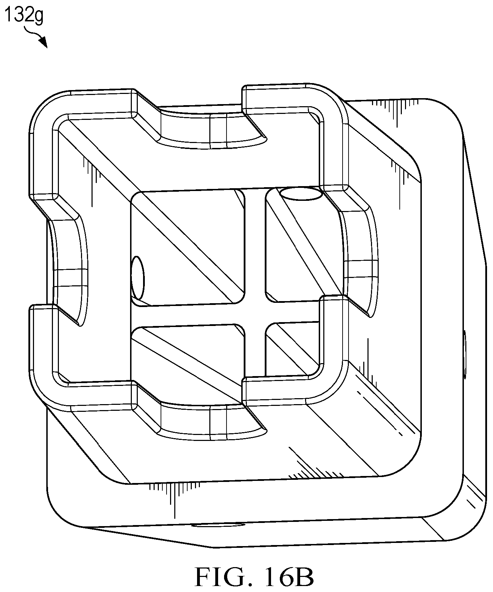

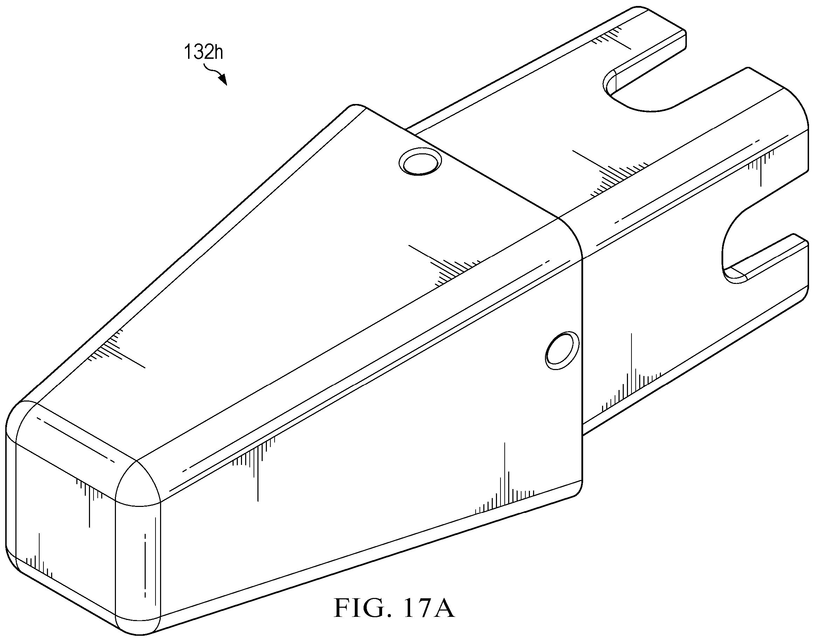

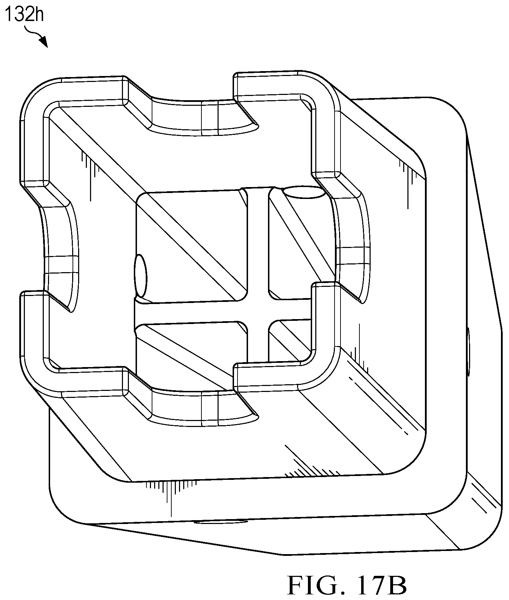

Additionally, FIGS. 13A through 17B depict additional example tapered guides. For example, FIGS. 13A and 13B depict the fourth example tapered guide 132d, FIGS. 14A and 14B depict the fifth example tapered guide 132e, FIGS. 15A and 15B depict the sixth example tapered guide 132f, FIGS. 16A and 16B depict the seventh example tapered guide 132g, and FIGS. 17A and 17B depict the eighth example tapered guide 132h. Each of the tapered guides 132d-132h may be substantially similar in structure and function to the tapered guide 132c described above with respect to FIGS. 12A and 12B, including, for example, the hollowed-out interior configuration 190, the L-shaped legs 174, the one or more weep holes 186, and the internal cross member 188. The tapered guides 132d-132h may each differ from the tapered guide 132c and from one another in one or more dimensional characteristics, including, for example, overall length, overall width, the length of the guide portion 152 relative to the length of the insert portion 154, the width of the canopy 162, the ridge thickness of the ridge 164, the taper angle α, and/or the relative height or profile of the guide portion 152. The particular dimensional configurations depicted in FIGS. 13A through 17B are provided by way of example only, and the tapered guides 132d-132h may each be provided in any other suitable dimensional configuration selected to accommodate different sizes of the first and second segments 122a, 122b and/or the splice tube 130 without departing from the scope of the present disclosure. It is to be appreciated that the disclosure set forth above with respect to the tapered guide 132c, including, for example, the taper angle α, the ridge 164, the canopy 162, the carveouts 176, the weep holes 186, the internal cross member 188, and the hollowed-out interior configuration 190, applies equally to each of the tapered guides 132d-132h unless otherwise noted. Further, it is to be appreciated that the tapered guides 132d-132h, and the components thereof, may be provided in other geometries than those explicitly disclosed herein without departing from the scope of the present disclosure.

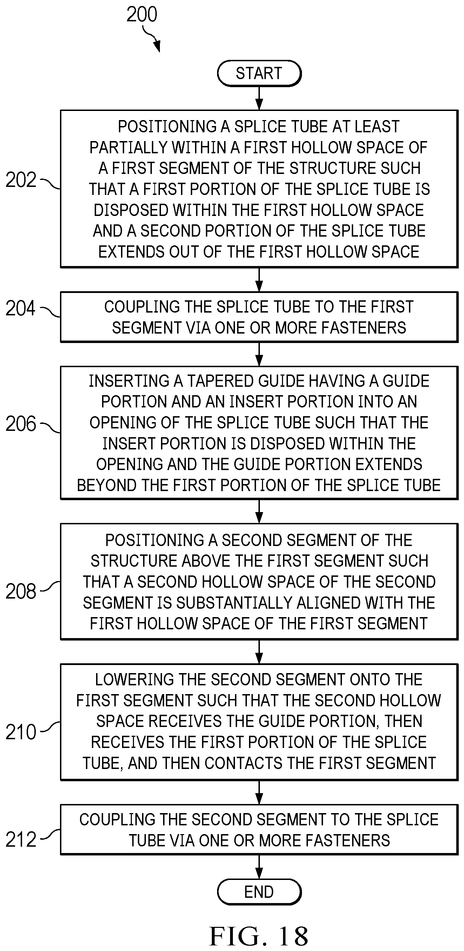

The splice tube 130 and the tapered guide 132 may be configured or designed to facilitate construction of a vertical structure (e.g., a column, beam, vertical duct, etc.), for example, by facilitating coupling between the first segment 122a and the second segment 122b. In some instances, the splice tube 130 and tapered guide 132 may facilitate coupling between the first and second segments 122a, 122b according to the method 200 depicted in FIGS. 18-23; however, in other instances, the splice tube 130 and tapered guide 132 may be utilized to facilitate coupling between the first and second segments 122a, 122b in any other suitable manner.

FIG. 18 is a flowchart depicting a method 200 of assembling a structure (e.g., vertical beam 112) including a first segment (e.g., first segment 122a) and a second segment (e.g., second segment 122b).

At a first step 202, a splice tube (e.g., splice tube 130) may be partially positioned within a first hollow space (e.g., hollow space 124) of the first segment such that a first portion of the splice tube (e.g., splice tube second end 138) is disposed within the first hollow space of the first segment and a second portion of the splice tube (e.g., splice tube first end 136) extends out of the first hollow space of the first segment.

At a second step 204, the splice tube may be coupled to the first segment via one or more fasteners (e.g., fasteners 178).

At a third step 206, a tapered guide (e.g., tapered guide 132) having a guide portion (e.g., guide portion 152) and an insert portion (e.g., insert portion 154) may be inserted into an opening (e.g., splice tube opening 144) of the splice tube such that the insert portion is disposed within the opening and the guide portion extends beyond the second portion of the splice tube.

At a fourth step 208, the second segment may be positioned above the first segment such that a second hollow space (e.g., hollow space 124) of the second segment is substantially aligned with the first hollow space of the first segment.

At a fifth step 210, the second segment may be lowered onto the first segment such that the second hollow space receives the guide portion of the tapered guide, then receives the second portion of the splice tube, and then approaches or contacts the first segment.

At a sixth step 212, the second segment may be coupled to the splice tube via one or more fasteners. However, in some instances, the sixth step 212 may be omitted.

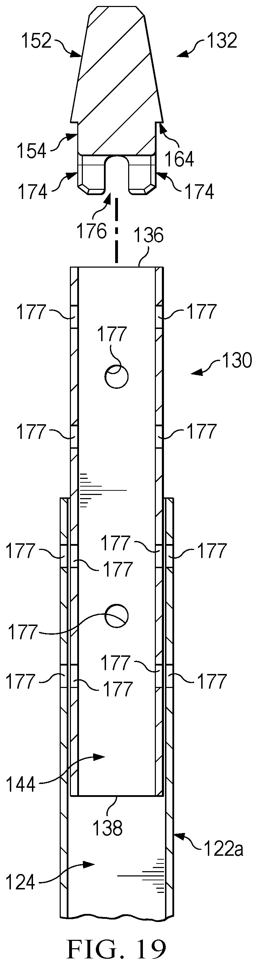

FIG. 19 illustrates an instance of the first step 202 of the method 200 of FIG. 18, where the splice tube 130 may be partially positioned within the hollow space 124 of the first segment 122a. For example, the splice tube second end 138 may be disposed within the first segment 122a and the splice tube first end 136 may emerge beyond (e.g., above) the first segment 122a. The tapered guide 132 may be positioned adjacent to the splice tube first end 136 in preparation for insertion into the splice tube opening 144. The splice tube 130 may include one or more fastener openings 177 configured or designed to facilitate coupling between the splice tube 130 and the first segment 122a and/or the second segment 122b. For example, in some instances, the first segment 122a may also include one or more fastener openings 177 positioned to align with the fastener openings 177 of the splice tube 130 such that a fastener can be received therethrough. However, in other instances, the splice tube 130 and the first segment 122a and/or the second segment 122b may be coupled together in any suitable manner.

FIG. 20 illustrates an instance of the second step 204 of the method 200 of FIG. 18, where the splice tube 130 may be coupled to the first segment 122a. For example, the splice tube 130 may be coupled to the first segment 122a via one or more fasteners 178 (e.g., bolts, screws, nails, or other fastening mechanisms). In some instances, the splice tube 130 may include a plurality of fastener openings 177 arranged such that one or more fastener openings 177 are positioned on each side of the splice tube 130. In this way, a fastener 178 may extend through each side of the splice tube 130 and the corresponding side of the first segment 122a, and an optional nut 182 may be provided on the opposing side to secure the fastener 178 in place. In some instances, the fasteners 178 may extend entirely through the first segment 122a and the splice tube 130, and at least a portion of the fasteners 178 may extend into the splice tube opening 144. For example, the fasteners 178 may extend through a first and second pair of associated fastener openings 177 positioned in opposing locations along the splice tube 130 and the first segment 122a. In other instances, the fasteners 178 may extend entirely through the first segment 122a and at least partially through the splice tube 130 but may not extend into the splice tube opening 144. The number and arrangement of fastener openings 177 may be selected based on the structural requirements of the application.

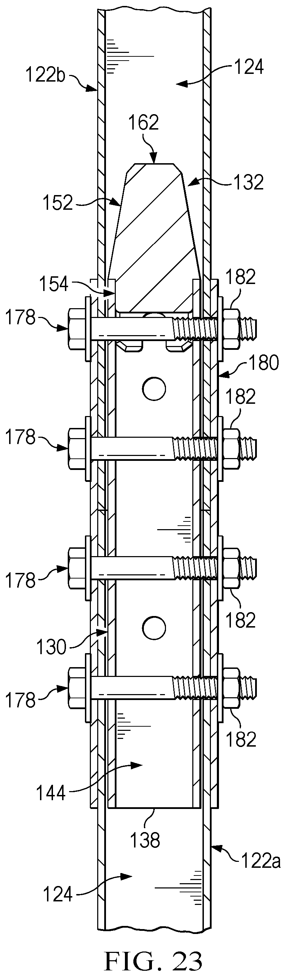

As shown in FIG. 20, in some instances, a single fastener 178 may be provided at this stage (e.g., before the second segment 122b is placed in the desired position) to temporarily secure the splice tube 130 with respect to the first segment 122a. The remaining fastener openings 177 may remain unoccupied until the second segment 122b moves into place (see FIG. 23).

In some instances, an optional support member 180 may be provided to further aid in coupling the first segment 122a and the second segment 122b. For example, the support member 180 may be configured or designed to impart additional rigidity or structural integrity to the juncture between the first and second segments 122a, 122b and/or to aid in positioning one of the first and second segments 122a, 122b relative to the other of the first and second segments 122a, 122b. In some instances, the support member 180 may be provided in the form of an external support member or sleeve configured or designed to fit around or circumscribe an exterior of the first segment 122a and/or the splice tube 130, and the support member 180 may be formed from a metal, plastic, or other rigid material. The support member 180 may have any suitable wall thickness selected based on the structural loads to be supported. In some instances, the support member 180 may be slid over the splice tube 130 from above prior to coupling the splice tube 130 to the first segment 122a via fasteners 178. In other instances, the support member 180 may be placed around the first segment 122a before the splice tube 130 is installed, or the support member 180 may be installed at any other suitable stage of the assembly process. However, in other instances, the support member 180 may be provided in other forms (e.g., the support member 180 may be provided in the form of an internal support member configured or designed to be positioned within the splice tube opening 144), and the support member 180 may be formed from any suitable material.

As shown, the support member 180 may include one or more fastener openings 177 provided in substantially the same form as the fastener openings of the splice tube 130 and first segment 122a. Thus, the fastener openings 177 of the support member 180 may be aligned with the fastener openings of the splice tube 130 and the first segment 122a such that the support member 180, splice tube 130, and first segment 122a may all be coupled together in the manner described above. In other instances, the support member 180, splice tube 130, and first segment 122a may be coupled together in other suitable manners, or the support member 180 may be omitted.

The support member 180 may be positioned relative to the first segment 122a and coupled thereto such that a first portion of the support member 180 (e.g., a lower portion) surrounds or receives a portion of the first segment 122a and a second portion of the support member 180 extends beyond the first segment 122a. In this way, a receiving space 184 may be formed between the second portion of the support member 180 and the adjacent portion of the splice tube 130. For example, the receiving space 184 may be provided as a peripheral space configured or designed to at least partially receive the second segment 122b when the second segment 122b is positioned atop the first segment 122a. In this way, the support member 180 may aid in the positioning of the second segment 122b in addition to imparting rigidity and/or structural integrity.

As shown in FIG. 20, with the splice tube 130 coupled to the first segment via one or more fasteners 178, the tapered guide 132 may be positioned proximate to the splice tube 130 such that at least a portion of the tapered guide 132 is arranged to be received within the splice tube opening 144. For example, the tapered guide 132 may be positioned adjacent to the splice tube first end 136 such that the insert portion 154 is substantially aligned with the splice tube opening 144.

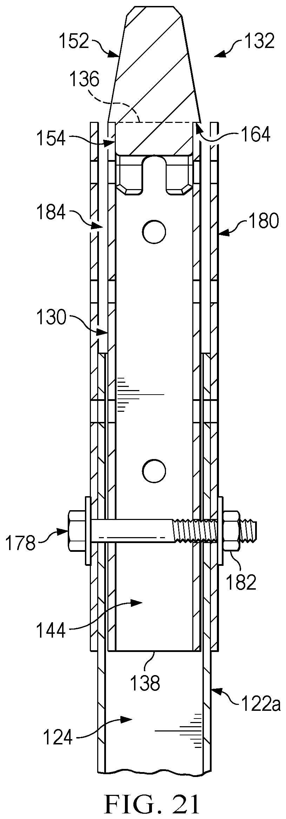

FIG. 21 illustrates an instance of the third step 206 of the method 200 of FIG. 18, where the tapered guide 132 may be moved toward the splice tube 130 such that the insert portion 154 is received within the splice tube opening 144. For example, the tapered guide 132 may extend into the splice tube opening 144 until the ridge 164 of the tapered guide 132 contacts or engages the splice tube first end 136. In some instances, the insert portion 154 may be disposed entirely within the splice tube opening 144. Additionally, in some instances, the insert portion 154 may be received within the splice tube opening 144 in a press fit, friction fit, or other fit. In other instances, the insert portion 154 may merely rest within the splice tube opening 144. The carveouts 176 of the tapered guide 132 may accommodate (e.g., leave room for) the portion of the fasteners 178 that extend into the splice tube opening 144.

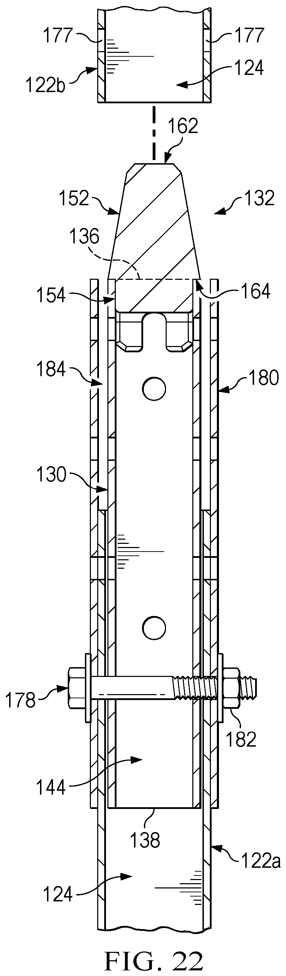

FIG. 22 illustrates an instance of the fourth step 208 and the fifth step 210 of the method 200 of FIG. 18, where, with the splice tube 130 coupled to the first segment 122a and the tapered guide 132 at least partially disposed within the splice tube opening 144, the second segment 122b may be positioned (e.g., positioned manually, suspended using a crane, winch, hoist, or other machine, etc.) above the first segment 122a such that the hollow space 124 of the second segment 122b is at least partially aligned with the hollow space 124 of the first segment 122a. The second segment 122b may thus be lowered onto the first segment 122a such that the tapered guide 132 and at least a portion of the splice tube 130 is received within the hollow space 124 of the second segment 122b. In other words, the second segment 122b may be at least partially received within the receiving space 184.

In some instances, the reduced width of the canopy 162 relative to the remainder of the guide portion 152 may increase an acceptable margin of error when lowering the second segment 122b onto the first segment 122a. For example, the tapered guide 132 may be configured or designed to accommodate a misalignment between the first and second segments 122a, 122b as long as the hollow space 124 of the second segment 122b is arranged to receive the canopy 162. When the canopy 162 is received within the hollow space 124, the remainder of the guide portion 152 (e.g., the tapered sides of the guide portion 152 that extend between the canopy 162 and the ridge 164) may correct any initial misalignment by guiding the second segment 122b into alignment with the first segment 122a as the second segment 122b is lowered.

FIG. 23 illustrates an instance of the the sixth step 212 of the method 200 of FIG. 18, where the second segment 122b may be lowered until it approaches or contacts (e.g., rests atop) the first segment 122a and the splice tube 130 and tapered guide 132 are each entirely positioned within the hollow space 124 of the first and second segments 122a, 122b. Depending on the circumstances, the second segment 122b may physically contact the first segment 122a or the second segment 122b may be positioned adjacent to, but may not physically contact, the first segment 122a. In some instances, the second segment 122b may then be coupled to the splice tube 130 and/or the tapered guide 132 via fasteners 178 (e.g., additional fasteners 178 relative to the fastener 178 used to couple the splice tube 130 and the first segment 122a, as shown in FIG. 20). For example, the second segment 122b may also include one or more fastener openings 177 arranged to align with one or more of the fastener openings 177 of the splice tube 130 and/or the support member 180. In some instances, the fasteners 178 may extend entirely through the second segment 122b, the splice tube 130, and/or the support member 180 and may at least partially extend into the tapered guide 132. In other instances, the fasteners 178 may extend entirely through the second segment 122b and at least partially through the splice tube 130 and/or the support member 180 but may not extend into the tapered guide 132. In still other instances, the second segment 122b may not be coupled to the splice tube 130 via fasteners 178.

It is to be appreciated that the method 200 may utilize any of the tapered guides (e.g., the tapered guide 132a, the tapered guide 132b, the tapered guide 132c, the tapered guide 132d, the tapered guide 132e, the tapered guide 132f, the tapered guide 132g, the tapered guide 132h), and variations thereof, discussed herein. In addition, the steps of the method 200 may be implemented more than once and in any order. Furthermore, any of the steps of the method 200 may be omitted in a particular implementation.

In a first implementation, a coupling assembly for joining a first segment and a second segment of a structure includes a splice tube including an opening extending entirely therethrough and a tapered guide defined by a first end and a second end. The tapered guide includes a guide portion positioned proximate to the first end, wherein the guide portion includes a guide portion first end and a guide portion second end, the guide portion including a ridge positioned at the guide portion second end, wherein a first width of the tapered guide at the guide portion first end is less than a second width of the tapered guide at the ridge. The tapered guide further includes an insert portion coupled to the guide portion and extending between the guide portion and the second end, the insert portion including at least one leg, wherein the insert portion is configured to be received within the opening of the splice tube.

In a second implementation, which may include the first implementation, the insert portion further includes at least one carveout positioned proximate to the second end.

In a third implementation, which may include the second implementation, the insert portion includes at least two legs that are substantially square in cross-section, and the at least one carveout is positioned between the at least two legs and is configured to accommodate one or more fasteners.

In a fourth implementation, which may include any of the first through third implementations, the tapered guide includes a hollowed-out interior configuration such that a hollow space extends through the tapered guide from the guide portion through the insert portion.

In a fifth implementation, which may include the fourth implementation, the tapered guide includes one or more weep holes extending through one or more walls of the guide portion and into the hollow space, the weep holes being configured to permit fluid to drain therethrough.

In a sixth implementation, which may include the fourth or fifth implementation, the coupling assembly further includes an internal cross member extending across the hollowed-out interior of the tapered guide between opposing interior walls thereof.

In a seventh implementation, which may include the fourth implementation, the at least one leg has an L-shaped cross-section.

In an eighth implementation, which may include any of the first through seventh implementations, the guide portion further includes a canopy positioned at the first end, the canopy being substantially planar and having a canopy width less than the second width at the ridge.

In a ninth implementation, a tapered guide for use with a splice tube includes a guide portion defined by a guide portion first end and a guide portion second end, an insert portion defined by an insert portion first end and an insert portion second end, the insert portion first end being coupled to the guide portion second end, a canopy positioned at the guide portion first end, a ridge positioned at the guide portion second end, at least one leg coupled to the insert portion proximate to the insert portion second end, and at least one carveout formed in the insert portion and positioned at the insert portion second end. The guide portion is tapered such that a width of the guide portion increases from a first width at the canopy to a second width greater than the first width at the ridge.

In a tenth implementation, which may include the ninth implementation, the ridge defines a ridge thickness projecting outwardly from the insert portion, wherein the ridge is configured to engage a first end of the splice tube.

In an eleventh implementation, which may include the ninth or tenth implementation, the guide portion includes a guide body defining a taper angle relative to a longitudinal axis of the tapered guide, the taper angle being imparted with a value of about 15° to about 45°.

In a twelfth implementation, which may include any of the ninth through eleventh implementations, the insert portion includes at least two legs, and the at least one carveout is positioned between the at least two legs and is configured to accommodate one or more fasteners.

In a thirteenth implementation, which may include any of the ninth through twelfth implementations, each leg defines a substantially square cross-section.

In a fourteenth implementation, which may include any of the ninth through twelfth implementations, each leg defines a substantially L-shaped cross-section.

In a fifteenth implementation, which may include any of the ninth through fourteenth implementations, the guide portion and the insert portion define a hollowed-out interior.

In a sixteenth implementation, a method of assembling a structure including a first segment and a second segment includes positioning a splice tube at least partially within a first hollow space of the first segment such that a first portion of the splice tube is disposed within the first hollow space and a second portion of the splice tube extends out of the first hollow space, coupling the splice tube to the first segment via one or more fasteners, inserting a tapered guide having a guide portion and an insert portion into an opening of the splice tube such that the insert portion is disposed within the opening and the guide portion extends beyond the second portion of the splice tube, positioning the second segment proximate to the first segment such that a second hollow space of the second segment is at least partially aligned with the first hollow space, and lowering the second segment onto the first segment such that the second hollow space receives the guide portion, then receives the second portion of the splice tube, and then approaches or contacts the first segment.

In a seventeenth implementation, which may include the sixteenth implementation, inserting the tapered guide includes extending the insert portion into the opening of the splice tube until a ridge of the guide portion contacts or engages a first end of the splice tube.

In an eighteenth implementation, which may include the sixteenth or seventeenth implementation, the method further includes positioning a support member around an exterior of the first segment prior to the lowering step, wherein a receiving space is formed between the support member and the splice tube, the receiving space being configured to at least partially receive the second segment.

In a nineteenth implementation, which may include any of the sixteenth through eighteenth implementations, the method further includes coupling the second segment to the splice tube via one or more additional fasteners after the lowering step.

In a twentieth implementation, which may include any of the sixteenth through nineteenth implementations, the insert portion includes at least one carveout extending through the insert portion and positioned proximate to a second end of the tapered guide, the at least one carveout being configured to accommodate the one or more fasteners extending into the opening of the splice tube.

In a twenty-first implementation, any of the sixteenth through twentieth implementations may be used to assemble the coupling assembly of any of the first through eighth implementations. In a twenty-second implementation, any of the sixteenth through twentieth implementations may be used with the tapered guide of any of the ninth through fifteenth implementations.

It will be appreciated by those skilled in the art that while the above disclosure has been described above in connection with particular embodiments and examples, the above disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference as if each such patent or publication were individually incorporated by reference herein. Various features and advantages of the above disclosure are set forth in the following claims.

## Claims

1. A coupling assembly for joining a first segment and a second segment of a structure, the coupling assembly including:
a splice tube including an opening extending entirely therethrough; and
a tapered guide defined by a first end and a second end, the tapered guide including:
a guide portion positioned proximate to the first end, wherein the guide portion includes a guide portion first end and a guide portion second end, the guide portion including a ridge positioned at the guide portion second end, wherein a first width of the tapered guide at the guide portion first end is less than a second width of the tapered guide at the ridge; and
an insert portion coupled to the guide portion and extending between the guide portion and the second end, the insert portion including at least one leg, wherein the insert portion is configured to be received within the opening of the splice tube.

2. The coupling assembly of claim 1, wherein the insert portion further includes at least one carveout positioned proximate to the second end.

3. The coupling assembly of claim 2, wherein the insert portion includes at least two legs that are substantially square in cross-section, and wherein the at least one carveout is positioned between the at least two legs and is configured to accommodate one or more fasteners.

4. The coupling assembly of any one of claims 1 to 3, wherein the tapered guide includes a hollowed-out interior configuration such that a hollow space extends from the guide portion through the insert portion.

5. The coupling assembly of claim 4, wherein the tapered guide includes one or more weep holes extending through one or more walls of the guide portion and into the hollow space, the weep holes being configured to permit fluid to drain therethrough.

6. The coupling assembly of claim 4 or 5, wherein the tapered guide further includes an internal cross member extending across the hollowed-out interior of the tapered guide and between opposing interior walls thereof.

7. The coupling assembly of any one of claims 4 to 6, wherein the at least one leg has an L-shaped cross-section.

8. The coupling assembly of any one of claims 1 to 7, wherein the guide portion further includes a canopy positioned at the first end, the canopy being substantially planar and having a canopy width less than the second width at the ridge.

9. The coupling assembly of any one of claims 1 to 8, wherein the guide portion includes a guide body defining a taper angle relative to a longitudinal axis of the tapered guide, the taper angle being imparted with a value of about 15° to about 45°.

10. The coupling assembly of any one of claims 1 to 9, wherein the ridge defines a ridge thickness projecting outwardly from the insert portion, wherein the ridge is configured to engage a first end of the splice tube.

11. A method of assembling a structure including a first segment and a second segment, the method comprising:
positioning a splice tube at least partially within a first hollow space of the first segment such that a first portion of the splice tube is disposed within the first hollow space and a second portion of the splice tube extends out of the first hollow space;
coupling the splice tube to the first segment via one or more fasteners;
inserting a tapered guide having a guide portion and an insert portion into an opening of the splice tube such that the insert portion is disposed within the opening and the guide portion extends beyond the second portion of the splice tube;
positioning the second segment proximate to the first segment such that a second hollow space of the second segment is at least partially aligned with the first hollow space; and
lowering the second segment onto the first segment such that the second hollow space receives the guide portion, then receives the second portion of the splice tube, and then approaches or contacts the first segment.

12. The method of claim 11, wherein inserting the tapered guide includes extending the insert portion into the opening of the splice tube until a ridge of the guide portion contacts or engages a first end of the splice tube.

13. The method of claim 11 or 12, further comprising positioning a support member around an exterior of the first segment prior to the lowering step, wherein a receiving space is formed between the support member and the splice tube, the receiving space being configured to at least partially receive the second segment.

14. The method of any one of claims 11 to 13, further comprising coupling the second segment to the splice tube via one or more additional fasteners after the lowering step.

15. The method of any one of claims 11 to 14, wherein the insert portion includes at least one carveout extending through the insert portion and positioned proximate to a second end of the tapered guide, the at least one carveout being configured to accommodate the one or more fasteners extending into the opening of the splice tube.
